# EUROPEAN PATENT SPECIFICATION

(11) **EP 4 501 548 B1**
(45) Date of publication and mention of the grant of the patent: **25.02.2026**
(21) Application number: 23189451.0
(22) Date of filing: 03.08.2023
(51) Int. Cl.: B25J 9/00, B25J 9/02, B25J 11/00, B25J 15/06, B60P 1/26, B65G 67/24

(54) **OPENING AND CLOSING ARRANGEMENT FOR CONTAINER AND/OR TRUCK TRAILER DOORS**
ÖFFNUNGS- UND SCHLIESSVORRICHTUNG FÜR CONTAINER- UND/ODER LASTWAGENANHÄNGERTÜREN
DISPOSITIF D'OUVERTURE ET DE FERMETURE POUR PORTES DE CONTENEUR ET/OU DE REMORQUE DE CAMION

(43) Date of publication of application: 05.02.2025
(73) Proprietor: MOS Engineering Oy, 76100 Pieksämäki (FI)
(72) Inventor: Tynkkynen, Heikki, 76100 Pieksämäki (FI); Häyrinen, Mika, 76100 Pieksämäki (FI)
(74) Representative: Papula Oy

(56) References cited:
- CN-A- 110 723 565
- JP-A- 2015 081 166
- JP-U- S62 102 786
- US-A1- 2019 322 319

## Description

### FIELD OF TECHNOLOGY

The invention relates to an opening and closing arrangement for container and/or truck trailer doors.

### BACKGROUND

The automation of freight traffic will create new needs to automate different stages of the logistics chain. One such need is to reduce the responsibility of the driver of container truck or other responsible persons in the preparation of the cargo space of the freight container for loading, unloading and transport.

Document US 2019/322319 A1 discloses a door station comprising top beams, a linear slide including lateral bars, and a door unlatching mechanism.

### OBJECT OF THE INVENTION

The object of the invention is to provide an arrangement by which the doors of the freight container and/or truck trailer can be automatically opened and closed.

### SUMMARY

The object of the invention can be achieved by the container and/or truck trailer door opening and closing arrangement according to claim 1.

The opening and closing arrangement according to the invention comprises two parallel linear guides extending in a first horizontal direction and arranged at a distance from each other, a further linear guide extending in a second horizontal direction perpendicular to the first direction, the further linear guide being movable along the linear guides. The container /truck trailer is arranged to be placed between the linear guides so that container/truck trailer doors face the further linear guide. The arrangement comprises one or more door handling devices mounted on the further linear guide and being movable along the further linear guide, which door handling device is configured to open and close the container/truck trailer door, wherein the door handling device comprises a gripping arrangement configured to grip and turn locking handle of the container/truck trailer door. The gripping arrangement comprises a gripping device configured to grip the locking handle, and a retractable and extendable lever mechanism connected to the gripping device.

Significant advantages can be achieved by means of the invention. The container/truck trailer doors can be opened and closed fully automatically without manual work which reduces the costs and improves the safety of the container/truck trailer handling.

### BRIEF DESCRIPTION OF THE DRAWINGS

The present disclosure will be better understood from the following detailed description read in light of the accompanying drawings, wherein:

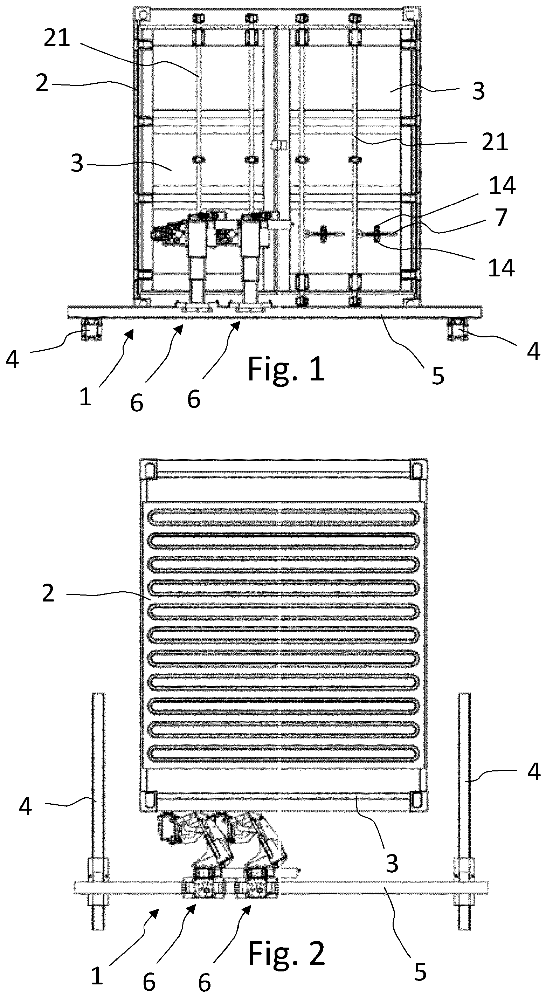

Fig. 1 shows an end view and fig. 2 a top view of the container and container/truck trailer door opening and closing arrangement according to an embodiment of the invention,

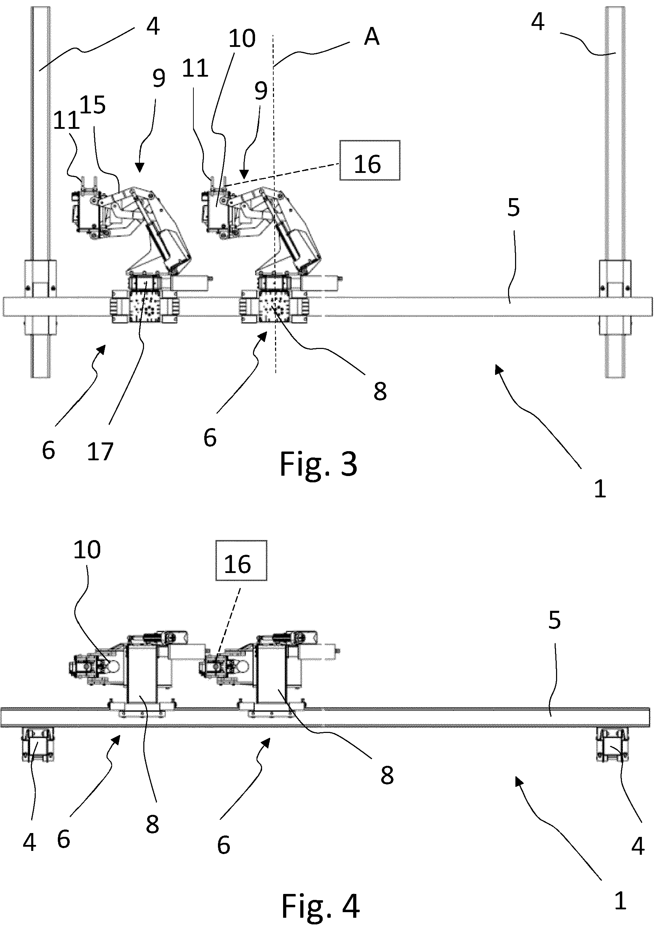

FIG. 3 shows a top view of the opening and closing arrangement of figs. 1 and 2,
FIG. 4 shows the arrangement of fig. 3 viewed from the end,
FIG. 5 shows a gripping arrangement of the arrangement shown in fig. 3 having a lever mechanism in an extended position and gripping claws in a gripping position,
Fig. 6 shows the gripping arrangement of fig. 5 after being rotated 90 degrees clockwise about an axis A,
Fig. 7 shows the gripping arrangement of fig. 5 having the gripping claws in an ungripping position,
Fig. 8 shows the gripping arrangement of fig. 7 after being rotated 90 degrees clockwise about the axis A,

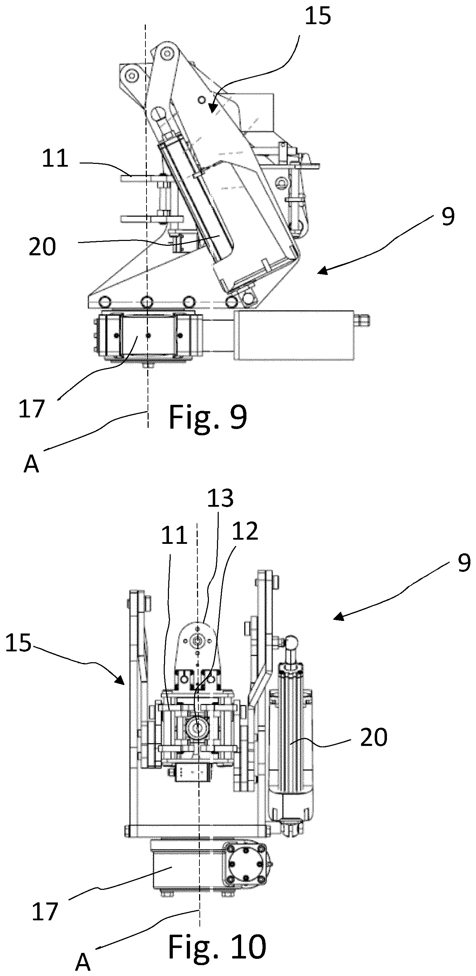

Fig. 9 shows the gripping arrangement of fig. 5 having the lever mechanism in a retracted position, and
Fig. 10 shows the gripping arrangement of fig. 9 after being rotated 90 degrees clockwise about the axis A.

### DETAILED DESCRIPTION

The drawings show an opening and closing arrangement 1 by which the doors 3 of the container 2 and/or the truck trailer can be automatically opened and closed. The container 2 may be a standard freight container referred to as ISO Container or Intermodal Container. The freight container has a width of 8 feet (2.44 m) and either 20 or 40 feet (6.10 or 12.19 m) standard length. The standard heights of the freight containers are 8 feet 6 inches (2.59 m) and 9 feet 6 inches (2.90 m).

The opening and closing arrangement 1 comprises two parallel linear guides 4 extending in a first horizontal direction. The linear guides 4 are arranged at a distance from each other. The distance between the linear guides 4 is greater than the width of the container 2/truck trailer. Thus, the container 2/truck trailer can be placed between the linear guides 4. The container 2 may be placed on container truck or trailer or container wagon, and both the container and truck/trailer/container wagon are placed between the linear guides 4.

The opening and closing arrangement 1 further comprises a further linear guide 5 extending in a second horizontal direction, which is perpendicular to the first horizontal direction. The further linear guide 5 is movably attached to the first linear guides 4. The second linear guide 5 is movable along the linear guides 4 in the first horizontal direction. The container 2/truck trailer can be placed between the linear guides 4 so that the doors 3 of the container 2/truck trailer face the further linear guide 5.

The opening and closing arrangement 1 further comprises one or more, typically two, door handling devices 6 movably mounted on the further linear guide 5. Each handling device 6 is movable along the further linear guide 5 in the second horizontal direction. The door handling device 6 is configured to grip and turn locking handles 7 of the container/truck trailer door 3, and to open and close the container/truck trailer door 3.

The door handling device 6 may comprise a vertically retractable and extendable lifting pillar 8 movably mounted on the further linear guide 5. The lifting pillar 8 is movable along the further linear guide 5 in the second horizontal direction. The door handling device 6 further comprises a gripping arrangement 9 configured to grip and turn the locking handle 7 of the container/truck trailer door 3. The gripping arrangement 9 is mounted on the lifting pillar 8.

The gripping arrangement 9 comprises a gripping device 10 configured to grip the locking handle 7. The gripping arrangement 9 further comprises a retractable and extendable lever mechanism 15 connected to the gripping device 10. The gripping arrangement 9 is provided with an actuator 20, such as an electric linear actuator, configured to move, e.g. retract and extend, the lever mechanism 15 and thus move the gripping device 10. The gripping device 10 may comprise gripping claws 11, ends of which are pivotally mounted on the frame of the gripping device 10. The gripping device 10 may comprise 4 to 6 gripping claws 11. The gripping claws 11 are arranged in two opposite gripping claw lines so that the locking handle 7 is positionable therebetween. The gripping claws 11 have a gripping position, in which the gripping claws 11 grip the locking handle 7, and an ungripping position, in which the locking handle 7 can be removed between the gripping claws 11.

The gripping device 10 further comprises an actuator (not shown) configured to move the gripping claws 11 between the gripping position and the ungripping position, and vice versa. The actuator may comprise a linear motor. The actuator is placed in the casing of the gripping device 10.

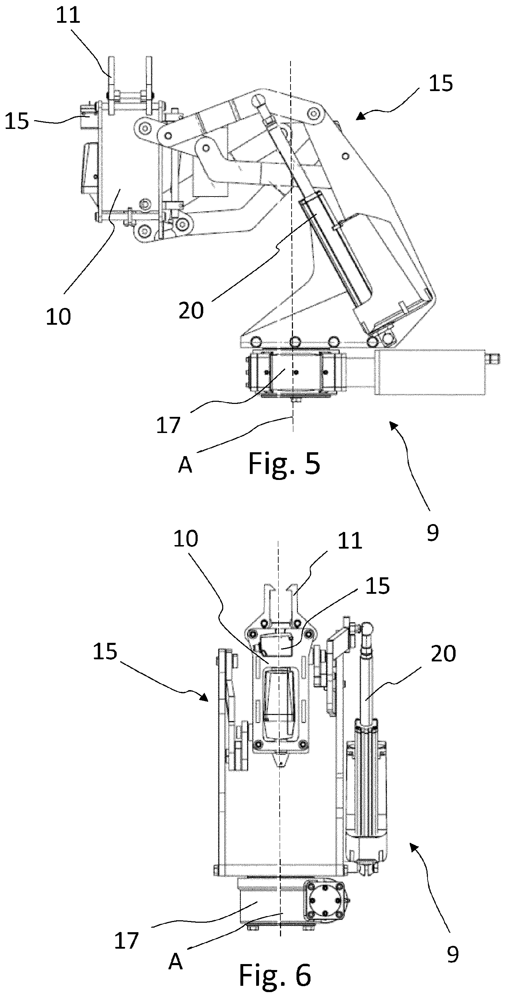

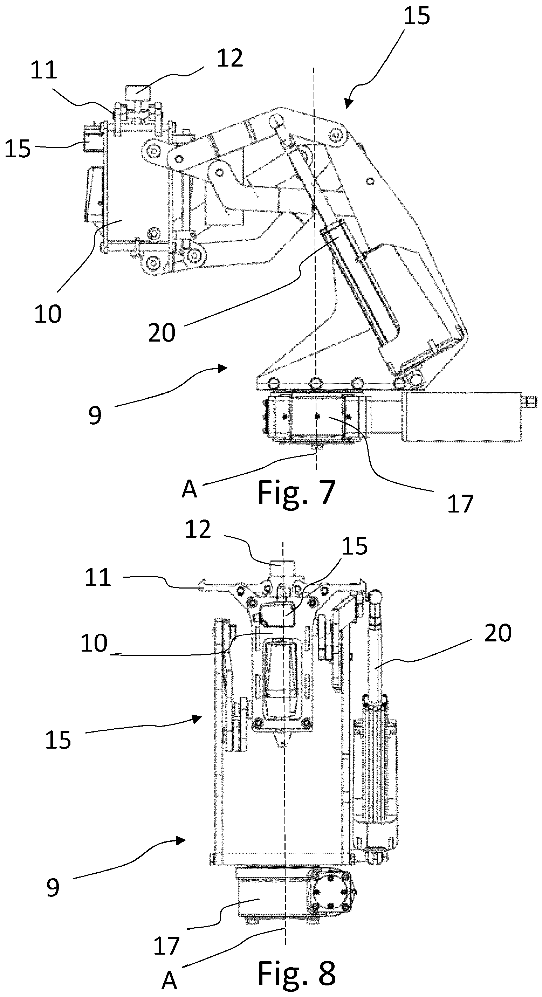

The gripping device 10 may further comprise an electromagnet 12 (shown in figs. 7 and 8). The electromagnet 12 may be arranged between the gripping claw lines. The electromagnet 12 is in an extended position when the gripping claws 11 are in the ungripping position (shown in figs. 7 and 8) and in a retracted position when the gripping claws 11 are in the gripping position (shown in figs. 5 and 6). The electromagnet 12 attaches to the locking handle 7 and pulls the locking handle 7 between the gripping claws 11 when the gripping claws 11 are being moved toward the gripping position. The electromagnet 12 is attached to lifting levers which are connected to the gripping claws 11 so that the electromagnet 12 is moved from the extended position toward the retracted position when the gripping claws 11 are being moved from the ungripping position toward the gripping position, and vice versa.

The gripping device 10 may comprise an opening device 13 configured to open and close the locking latches 14 of the locking handle 7. The locking latches 14 are connected to the container/truck trailer door 3 and arranged below and above the locking handle 7. The opening device 13 may comprise a rotatable tool, such as a cup brush, which is pressed against the locking latch 14, e.g., a mounting screw of the locking latch 14, and an electric motor for rotating the rotatable tool for turning the locking latch 14 from a latched position to an unlatched position, and vice versa.

The gripping arrangement 9 further comprises a rotator 17 attached to the lifting pillar 8. The lever mechanism 15 is connected to the rotator 17. The rotator 17 is configured to rotate the gripping device 10 and the lever mechanism 15 around a rotation axis A, which is parallel to the first direction.

The handling device 6, e.g., the gripping device 10, comprises a distance meter 19, such as a laser distance meter, for measuring distance from the handling device 6 to the container 2/truck trailer at the same time as the handling device 6 is being moved along the further linear guide 5 and/or the further linear guide 5 is being moved along the linear guides 4. The opening and closing arrangement 1 is provided with a control unit 16 configured to receive the measurement data from the distance meter 19 and to define the location of the container 3/truck trailer between the linear guides 4 and/or dimensions of the container 2/truck trailer based on the measurement data. The distance meter 19 is also configured to determine the location of the door locking mechanism, such as the locking handle(s) 7 and/or locking rod(s) 21 of the door 3, and the control unit 16 is configured to define the type of the locking mechanism/container 2/truck trailer based on the measurement data. The control unit 16 is also configured to control the movement of the handling devices 6.

The opening and closing arrangement 1 may be operated as follows. The container 2/truck trailer is moved between the linear guides 4 such that the container/truck trailer doors 3 face the further linear guide 5. The location of the container 2/truck trailer is determined by the distance meter 19 and the control unit 16. Moreover, the location of the door locking mechanism, such as the locking handle(s) 7 and/or locking rod(s) 21 of the door 3, is defined by the distance meter 19, and the type of the locking mechanism/container 2/truck trailer is determined based on the measurement data.

The further linear guide 5 is moved along the linear guides 4 and/or the door handling device 6 is moved along the further linear guide 5 to a point in which the locking mechanism of the doors 3 is within the operating range of the handling device 6. Thereafter, the locking latches 14 of the locking handle(s) 7 are turned to unlatched positions by the gripping arrangement 9, i.e., the opening devices 13.

The locking handle 7 of the door 3 is turned to open position. The locking handle 7 is gripped by the gripping device 10, and the gripping device 10 is turned by the lever mechanism 15 so that the locking handle 7 turns to the open position. The other handle 7 is opened in a similar manner. The door 3 is pulled partly open by pulling the locking handle 7 with the gripping device 10 and/or electromagnet 12. Thereafter, the gripping device 10 is rotated by the rotator 17, e.g., 90 degrees clockwise, and the gripping claws 11 are moved to ungripping position so that the locking handle 7 is released from the gripping device 10.

The handling device 6 is moved along the second linear guide 5 to a position in which the gripping device 10 can be moved between the partly open door 3 and the container/truck trailer frame. Thereafter, the door 3 is fully opened by moving the door handling device 6 along the second linear guide 5 and the second linear guide 5 along the linear guides 4. Thus, the door 3 is pushed open with the gripping device 10.

When the door 3 has been opened, the other door 3 is opened in a similar manner with the same or another door handling device 6.

The door 3 is closed by moving the second linear guide 5 along the linear guides 4 and/or the handling device 6 along the second linear guide 5 so that the handling device 6 is between the sidewall of the container 2/truck trailer and the opened door 3. The door 3 is closed by moving the second linear guide 5 along the linear guide 4 and the handling device 6 along the second linear guide 5 so that the door 3 is pushed towards the closed position. Thereafter, the electromagnet 12 is attached to the locking handle 7. The gripping device 10 and the locking handle 7 are lifted by the lever mechanism 15. When the locking handle 7 has been sufficiently lifted, the locking handle 7 is gripped by the gripping claws 11. The locking handle 7 is turned to the closed position by the gripping device 10, and the gripping claws 11 are moved to the ungripping position. The locking latches 14 are turned to the latched positions by the opening device 13. The other locking handle 7 is locked in a similar manner. When the door 3 has been closed, the other door 3 is closed in a similar manner with the same or another handling device 6.

It is obvious to the person skilled in the art that the invention is not limited solely to the embodiments presented above, but that it can be varied within the scope of the claims presented below.

## Claims

1. An opening and closing arrangement (1) for container and/or truck trailer doors (3), comprising
- two parallel linear guides (4) extending in a first horizontal direction and arranged at a distance from each other,
- a further linear guide (5) extending in a second horizontal direction perpendicular to the first direction, the further linear guide (5) being movable along the linear guides (4), wherein the container (2)/truck trailer is arranged to be placed between the linear guides (4) so that container/truck trailer doors (3) face the further linear guide (5), and
- one or more door handling devices (6) mounted on the further linear guide (5) and being movable along the further linear guide (5), which door handling device (6) is configured to open and close the container/truck trailer door (3), wherein the door handling device (6) comprises a gripping arrangement (9) with a gripping device (10) configured to grip and turn locking handle(s) (7) of the container/truck trailer door (3), **characterized in that** the gripping arrangement (9) comprises a retractable and extendable lever mechanism (15) connected to the gripping device (10).

2. The opening and closing arrangement (1) according to claim 1, **characterized in that** each door handling device (6) comprises a vertically retractable and extendable lifting pillar (8) movably attached to the further linear guide (5), and the gripping arrangement (9) is mounted on the lifting pillar (8).

3. The opening and closing arrangement (1) according to claim 1 or 2, **characterized in that** the gripping device (10) comprises gripping claws (11) having a gripping position, in which the gripping claws (11) are arranged to grip the locking handle (7), and an ungripping position, in which the locking handle (7) is removable between the gripping claws (11).

4. The opening and closing arrangement (1) according to any of the preceding claims, **characterized in that** gripping arrangement (9) further comprises a rotator (17) attached to the lifting pillar (8), and the lever mechanism (15) is connected to the rotator (17), which rotator (17) is configured to rotate the gripping device (10) and the lever mechanism (15) around a rotation axis (A) parallel to the first direction.

5. The opening and closing arrangement (1) according to any of the preceding claims, **characterized in that** the gripping device (10) comprises an opening device (13) configured to open and close locking latches (14) of the locking handle (7).

6. The opening and closing arrangement (1) according to claim 5, **characterized in that** the opening device (13) comprises a rotatable tool (18), such as a cup brush, arranged to be pressed against the locking latch, e.g., a mounting screw of the locking latch, and an electric motor for rotating the rotatable tool (18) for turning the locking latch (14) from a latched position to an unlatched position, and vice versa.

7. The opening and closing arrangement (1) according to any of the preceding claims, **characterized in that** the handling device (6) comprises a distance meter (19) configured to measure the location of the door locking mechanism, such as the locking handle(s) (7) and/or locking rod(s) (21) of the door (3), and the opening and closing arrangement (1) is provided with a control unit (16) configured to receive the measurement data from the distance meter (19) and to define the type of the locking mechanism/container (2)/truck trailer based on the measurement data.

8. The opening and closing arrangement (1) according to any of the preceding claims, **characterized in that** the gripping device (10) comprises an electromagnet (12) capable of attaching to the locking handle (7) of the door (3).

9. A method of opening and closing doors (3) of a container (2) and/or truck trailer, **characterized in that** the doors (3) are opened and closed by an opening and closing arrangement (1) according to any of the preceding claims.

10. The method according to claim 9, **characterized in that**
- the further linear guide (5) is moved along the linear guides (4) and/or the door handling device(s) (6) is moved along the further linear guide (5) to a point, in which the locking mechanism of the door (3) is within the operating range of the gripping arrangements (9),
- the locking latches (14) of the locking handle (7) are turned to unlatched positions by the gripping arrangement (9), e.g. opening device (13),
- the locking handle (7) is turned to open position by the gripping arrangement (9), e.g., gripping device (10),
- the container door (3) is pulled partly open by pulling the locking handle (7) with gripping arrangement (9), e.g., with gripping device (10) and/or electromagnet (12),
- the door handling device (6) is moved between the partly open door (3) and the frame of the container (2)/truck trailer, and
- the door (3) is fully opened by moving the handling device (6) along the further linear guide (5) and/or moving the further linear guide (5) along the linear guides (4).

11. The method according to claim 10, **characterized in that** the further linear guide (5) is moved along the linear guides (4) and/or the handling device (6) is moved along the further linear guide (5) so that the handling device (6) is between the side of container (3)/truck trailer and the opened door (3), and the door (3) is closed by moving the further linear guide (5) along the linear guides (4) and the handling device (6) along the further linear guide (5).

12. The method according to claim 11, **characterized in that** locking handle (7) is turned to closed position, and the locking latches (14) are turned to the latched positions by the gripping arrangement (9).

13. The method according to any of the preceding claims 9-12, **characterized in that** the handling device (6) comprises distance meter (19) by which the distance from the handling device (6) to the container (2)/truck trailer is measured at the same time as handling device (6) is being moved along the further linear guide (5) and/or the further linear guide (5) is being moved along the linear guides (4), and the location and/or dimensions of the container (2)/truck trailer are defined based on the measurement data of the distance meter (19).

14. The method according to claim 13, **characterized in that** the location of the door locking mechanism, such as the locking handle (7) and/or locking rod (21) of the door (3), is determined by the distance meter (19), and the type of the locking mechanism is defined based on the measurement data.

## Patentansprüche

1. Öffnungs- und Schließanordnung (1) für Container- und/oder LKW-Anhängertüren (3), umfassend
- zwei parallele lineare Führungen (4), die sich in einer ersten horizontalen Richtung erstrecken und in einem Abstand voneinander angeordnet sind,
- eine weitere lineare Führung (5), die sich in einer zweiten horizontalen Richtung orthogonal zu der ersten Richtung erstreckt, wobei die weitere lineare Führung (5) entlang den linearen Führungen (4) beweglich ist, wobei der Container (2)/LKW-Anhänger dazu eingerichtet ist, zwischen den linearen Führungen (4) platziert zu werden, so dass Container-/LKW-Anhängertüren (3) der weiteren linearen Führung (5) zugewandt sind, und
- ein oder mehrere Türhandhabungsgeräte (6), die an der weiteren linearen Führung (5) montiert sind und entlang der weiteren linearen Führung (5) beweglich sind, wobei das Türhandhabungsgerät (6) dazu konfiguriert ist, die Container-/LKW-Anhängertür (3) zu öffnen und zu schließen, wobei das Türhandhabungsgerät (6) eine Greifanordnung (9) mit einem Greifgerät (10) umfasst, das dazu konfiguriert ist, Verriegelungsgriff(e) (7) der Container-/LKW-Anhängertür (3) zu greifen und zu drehen,
**dadurch gekennzeichnet, dass** die Greifanordnung (9) einen einziehbaren und ausziehbaren Hebelmechanismus (15) umfasst, der mit dem Greifgerät (10) verbunden ist.

2. Öffnungs- und Schließanordnung (1) gemäß Anspruch 1, **dadurch gekennzeichnet, dass** jedes Türhandhabungsgerät (6) eine vertikal einziehbare und ausziehbare Hubsäule (8) umfasst, die beweglich an der weiteren linearen Führung (5) angebracht ist, und die Greifanordnung (9) an der Hubsäule (8) montiert ist.

3. Öffnungs- und Schließanordnung (1) gemäß Anspruch 1 oder 2, **dadurch gekennzeichnet, dass** das Greifgerät (10) Greifklauen (11) umfasst, die eine Greifposition, in der die Greifklauen (11) dazu eingerichtet sind, den Verriegelungsgriff (7) zu greifen, und eine Nichtgreifposition aufweisen, in der der Verriegelungsgriff (7) zwischen den Greifklauen (11) entfernbar ist.

4. Öffnungs- und Schließanordnung (1) gemäß einem der vorangehenden Ansprüche, **dadurch gekennzeichnet, dass** die Greifanordnung (9) ferner einen Rotator (17) umfasst, der an der Hubsäule (8) angebracht ist, und der Hebelmechanismus (15) mit dem Rotator (17) verbunden ist, wobei der Rotator (17) dazu konfiguriert ist, das Greifgerät (10) und den Hebelmechanismus (15) um eine Rotationsachse (A) parallel zu der ersten Richtung zu rotieren.

5. Öffnungs- und Schließanordnung (1) gemäß einem der vorangehenden Ansprüche, **dadurch gekennzeichnet, dass** das Greifgerät (10) ein Öffnungsgerät (13) umfasst, das dazu konfiguriert ist, Verriegelungsriegel (14) des Verriegelungsgriffs (7) zu öffnen und zu schließen.

6. Öffnungs- und Schließanordnung (1) gemäß Anspruch 5, **dadurch gekennzeichnet, dass** das Öffnungsgerät (13) ein rotierbares Werkzeug (18), wie beispielsweise eine Becherbürste, das dazu eingerichtet ist, gegen den Verriegelungsriegel, z. B. eine Montageschraube des Verriegelungsriegels, gedrückt zu werden und einen Elektromotor zum Rotieren des rotierbaren Werkzeugs (18) zum Drehen des Verriegelungsriegels (14) von einer verriegelten Position in eine nicht verriegelte Position und umgekehrt umfasst.

7. Öffnungs- und Schließanordnung (1) gemäß einem der vorangehenden Ansprüche, **dadurch gekennzeichnet, dass** das Handhabungsgerät (6) einen Abstandsmesser (19) umfasst, der dazu konfiguriert ist, den Ort des Türverriegelungsmechanismus zu messen, wie beispielsweise den/die Verriegelungsgriff(e) (7) und/oder Verriegelungsstange(n) (21) der Tür (3), und die Öffnungs- und Schließanordnung (1) mit einer Steuereinheit (16) versehen ist, die dazu konfiguriert ist, die Messdaten von dem Abstandsmesser (19) zu empfangen und den Typ des Verriegelungsmechanismus/Containers (2)/LKW-Anhängers basierend auf den Messdaten zu definieren.

8. Öffnungs- und Schließanordnung (1) gemäß einem der vorangehenden Ansprüche, **dadurch gekennzeichnet, dass** das Greifgerät (10) einen Elektromagneten (12) umfasst, der dazu in der Lage ist, an dem Verriegelungsgriff (7) der Tür (3) angebracht zu sein.

9. Verfahren zum Öffnen und Schließen von Türen (3) eines Containers (2) und/oder LKW-Anhängers, **dadurch gekennzeichnet, dass** die Türen (3) durch eine Öffnungs- und Schließanordnung (1) gemäß einem der vorangehenden Ansprüche geöffnet und geschlossen werden.

10. Verfahren gemäß Anspruch 9, **dadurch gekennzeichnet, dass**
- die weitere lineare Führung (5) entlang den linearen Führungen (4) bewegt wird und/oder das/die Türhandhabungsgerät(e) (6) entlang der weiteren linearen Führung (5) zu einem Punkt bewegt wird/werden, an dem der Verriegelungsmechanismus der Tür (3) innerhalb des Betriebsbereichs der Greifanordnungen (9) ist,
- die Verriegelungsriegel (14) des Verriegelungsgriffs (7) durch die Greifanordnung (9), z. B. das Öffnungsgerät (13), in nicht verriegelte Positionen gedreht werden,
- der Verriegelungsgriff (7) durch die Greifanordnung (9), z. B. das Greifgerät (10), in eine offene Position gedreht wird,
- die Containertür (3) teilweise aufgezogen wird, indem der Verriegelungsgriff (7) mit der Greifanordnung (9), z. B. mit dem Greifgerät (10) und/oder dem Elektromagneten (12), gezogen wird,
- das Türhandhabungsgerät (6) zwischen der teilweise geöffneten Tür (3) und dem Rahmen des Containers (2)/LKW-Anhängers bewegt wird, und
- die Tür (3) vollständig geöffnet wird, indem das Handhabungsgerät (6) entlang der weiteren linearen Führung (5) bewegt wird und/oder die weitere lineare Führung (5) entlang den linearen Führungen (4) bewegt wird.

11. Verfahren gemäß Anspruch 10, **dadurch gekennzeichnet, dass** die weitere lineare Führung (5) entlang den linearen Führungen (4) bewegt wird und/oder das Handhabungsgerät (6) entlang der weiteren linearen Führung (5) bewegt wird, so dass sich das Handhabungsgerät (6) zwischen der Seite des Containers (3)/LKW-Anhängers und der geöffneten Tür (3) befindet, und die Tür (3) geschlossen wird, indem die weitere lineare Führung (5) entlang den linearen Führungen (4) und das Handhabungsgerät (6) entlang der weiteren linearen Führung (5) bewegt wird.

12. Verfahren gemäß Anspruch 11, **dadurch gekennzeichnet, dass** der Verriegelungsgriff (7) in eine geschlossene Position gedreht wird und die Verriegelungsriegel (14) durch die Greifanordnung (9) in die verriegelten Positionen gedreht werden.

13. Verfahren gemäß einem der vorangehenden Ansprüche 9-12, **dadurch gekennzeichnet, dass** das Handhabungsgerät (6) einen Abstandsmesser (19) umfasst, durch den der Abstand von dem Handhabungsgerät (6) zu dem Container (2)/LKW-Anhänger zur gleichen Zeit gemessen wird, zu der das Handhabungsgerät (6) entlang der weiteren linearen Führung (5) bewegt wird und/oder die weitere lineare Führung (5) entlang den linearen Führungen (4) bewegt wird, und der Ort und/oder die Abmessungen des Containers (2)/LKW-Anhängers basierend auf den Messdaten des Abstandsmessers (19) definiert werden.

14. Verfahren gemäß Anspruch 13, **dadurch gekennzeichnet, dass** der Ort des Türverriegelungsmechanismus, wie beispielsweise der Verriegelungsgriff (7) und/oder die Verriegelungsstange (21) der Tür (3), durch den Abstandsmesser (19) bestimmt wird und der Typ des Verriegelungsmechanismus basierend auf den Messdaten definiert wird.

## Revendications

1. Agencement d'ouverture et de fermeture (1) pour des portes (3) de conteneur et/ou de remorque de camion, comprenant
- deux guides linéaires (4) parallèles s'étendant dans une première direction horizontale et agencés à une certaine distance l'un de l'autre,
- un autre guide linéaire (5) s'étendant dans une seconde direction horizontale perpendiculaire à la première direction, l'autre guide linéaire (5) étant mobile le long des guides linéaires (4), dans lequel le conteneur (2)/la remorque de camion est agencé(e) pour être placé(e) entre les guides linéaires (4) de sorte que les portes (3) de conteneur/de remorque de camion soient tournées vers l'autre guide linéaire (5), et
- un ou plusieurs dispositifs (6) de manipulation de porte montés sur l'autre guide linéaire (5) et mobiles le long de l'autre guide linéaire (5), lequel dispositif (6) de manipulation de porte est configuré pour ouvrir et fermer la porte (3) de conteneur/de remorque de camion, dans lequel le dispositif (6) de manipulation de porte comprend un agencement de préhension (9) avec un dispositif de préhension (10) configuré pour saisir et faire tourner la/les poignée(s) de verrouillage (7) de la porte (3) de conteneur/de remorque de camion, **caractérisé en ce que** l'agencement de préhension (9) comprend un mécanisme (15) à levier rétractable et extensible relié au dispositif de préhension (10).

2. Agencement d'ouverture et de fermeture (1) selon la revendication 1, **caractérisé en ce que** chaque dispositif (6) de manipulation de porte comprend une colonne de levage (8) rétractable et extensible verticalement fixée de manière mobile à l'autre guide linéaire (5), et l'agencement de préhension (9) est monté sur la colonne de levage (8).

3. Agencement d'ouverture et de fermeture (1) selon la revendication 1 ou la revendication 2, **caractérisé en ce que** le dispositif de préhension (10) comprend des griffes de préhension (11) présentant une position de préhension, dans laquelle les griffes de préhension (11) sont agencées pour saisir la poignée de verrouillage (7), et une position de desserrage, dans laquelle la poignée de verrouillage (7) est amovible entre les griffes de préhension (11).

4. Agencement d'ouverture et de fermeture (1) selon l'une quelconque des revendications précédentes, **caractérisé en ce que** l'agencement de préhension (9) comprend en outre un rotateur (17) fixé à la colonne de levage (8), et le mécanisme (15) à levier est relié au rotateur (17), lequel rotateur (17) est configuré pour faire tourner le dispositif de préhension (10) et le mécanisme (15) à levier autour d'un axe de rotation (A) parallèle à la première direction.

5. Agencement d'ouverture et de fermeture (1) selon l'une quelconque des revendications précédentes, **caractérisé en ce que** le dispositif de préhension (10) comprend un dispositif d'ouverture (13) configuré pour ouvrir et fermer des loquets de verrouillage (14) de la poignée de verrouillage (7).

6. Agencement d'ouverture et de fermeture (1) selon la revendication 5, **caractérisé en ce que** le dispositif d'ouverture (13) comprend un outil rotatif (18), tel qu'une brosse coupelle, agencé pour être pressé contre le loquet de verrouillage, par exemple une vis de montage du loquet de verrouillage, et un moteur électrique pour faire tourner l'outil rotatif (18) afin de tourner le loquet de verrouillage (14) à partir d'une position verrouillée vers une position déverrouillée, et inversement.

7. Agencement d'ouverture et de fermeture (1) selon l'une quelconque des revendications précédentes, **caractérisé en ce que** le dispositif de manipulation (6) comprend un télémètre (19) configuré pour mesurer l'emplacement du mécanisme de verrouillage de porte, tel que la/les poignée(s) de verrouillage (7) et/ou la/les tige(s) de verrouillage (21) de la porte (3), et l'agencement d'ouverture et de fermeture (1) est muni d'une unité de commande (16) configurée pour recevoir les données de mesure du télémètre (19) et pour définir le type du mécanisme de verrouillage/conteneur (2)/remorque de camion sur la base des données de mesure.

8. Agencement d'ouverture et de fermeture (1) selon l'une quelconque des revendications précédentes, **caractérisé en ce que** le dispositif de préhension (10) comprend un électroaimant (12) apte à se fixer sur la poignée de verrouillage (7) de la porte (3).

9. Procédé d'ouverture et de fermeture de portes (3) d'un(e) conteneur (2) et/ou remorque de camion, **caractérisé en ce que** les portes (3) sont ouvertes et fermées au moyen d'un agencement d'ouverture et de fermeture (1) selon l'une quelconque des revendications précédentes.

10. Procédé selon la revendication 9, **caractérisé en ce que**
- l'autre guide linéaire (5) est déplacé le long des guides linéaires (4) et/ou le(s) dispositif(s) (6) de manipulation de porte est(sont) déplacé(s) le long de l'autre guide linéaire (5) jusqu'à un point où le mécanisme de verrouillage de la porte (3) se situe dans la plage de fonctionnement des agencements de préhension (9),
- les loquets de verrouillage (14) de la poignée de verrouillage (7) sont tournés vers les positions déverrouillées au moyen de l'agencement de préhension (9), par exemple le dispositif d'ouverture (13),
- la poignée de verrouillage (7) est tournée vers la position ouverte au moyen de l'agencement de préhension (9), par exemple le dispositif de préhension (10),
- la porte (3) de conteneur est tirée en position partiellement ouverte en tirant sur la poignée de verrouillage (7) avec l'agencement de préhension (9), par exemple avec le dispositif de préhension (10) et/ou l'électroaimant (12),
- le dispositif (6) de manipulation de porte est déplacé entre la porte (3) partiellement ouverte et le châssis du conteneur (2)/de la remorque de camion, et
- la porte (3) est complètement ouverte en déplaçant le dispositif (6) de manipulation le long de l'autre guide linéaire (5) et/ou en déplaçant l'autre guide linéaire (5) le long des guides linéaires (4).

11. Procédé selon la revendication 10, **caractérisé en ce que** l'autre guide linéaire (5) est déplacé le long des guides linéaires (4) et/ou le dispositif (6) de manipulation est déplacé le long de l'autre guide linéaire (5) de sorte que le dispositif (6) de manipulation se trouve entre le côté du conteneur (3)/de la remorque de camion et la porte (3) ouverte, et la porte (3) est fermée en déplaçant l'autre guide linéaire (5) le long des guides linéaires (4) et le dispositif (6) de manipulation le long de l'autre guide linéaire (5).

12. Procédé selon la revendication 11, **caractérisé en ce que** la poignée de verrouillage (7) est tournée vers la position fermée, et les loquets de verrouillage (14) sont tournés vers les positions verrouillées au moyen de l'agencement de préhension (9).

13. Procédé selon l'une quelconque des revendications 9 à 12 précédentes, **caractérisé en ce que** le dispositif (6) de manipulation comprend un télémètre (19) au moyen duquel la distance du dispositif (6) de manipulation au conteneur (2)/à la remorque de camion est mesurée en même temps que le dispositif (6) de manipulation est déplacé le long de l'autre guide linéaire (5) et/ou que l'autre guide linéaire (5) est déplacé le long des guides linéaires (4), et l'emplacement et/ou les dimensions du conteneur (2)/de la remorque de camion sont définis sur la base des données de mesure du télémètre (19).

14. Procédé selon la revendication 13, **caractérisé en ce que** l'emplacement du mécanisme de verrouillage de porte, tel que la poignée de verrouillage (7) et/ou la tige de verrouillage (21) de la porte (3), est déterminé par le télémètre (19), et le type du mécanisme de verrouillage est défini sur la base des données de mesure.
